(19) **Europäisches Patentamt / European Patent Office / Office européen des brevets**

(11) **EP 1 289 078 B1**

(12) # EUROPEAN PATENT SPECIFICATION

(45) Date of publication and mention
of the grant of the patent:
**24.10.2007 Bulletin 2007/43**

(51) Int Cl.:
**H04B 10/17** (2006.01)  **H04B 10/18** (2006.01)
**H04B 10/10** (2006.01)  **H01S 3/30** (2006.01)
**H01S 3/067** (2006.01)  **G02B 6/02** (2006.01)
**G02B 6/036** (2006.01)

(21) Application number: **02018288.7**

(22) Date of filing: **23.08.2002**

(54) **Optical transmission line and optical communication system**

Optische Übertragungsleitung und optisches Kommunikationssystem

Ligne de transmission optique et système de communication optique

(84) Designated Contracting States:
**DE FR IT**

(30) Priority: **27.08.2001 JP 2001256778**

(43) Date of publication of application:
**05.03.2003 Bulletin 2003/10**

(73) Proprietor: **Sumitomo Electric Industries, Ltd.**
**Osaka-shi,**
**Osaka 541-0041 (JP)**

(72) Inventors:
• **Tsukitani, Masao,**
**Yokohama Works**
**Yokohama-shi,**
**Kanagawa (JP)**
• **Miyamoto, Toshiyuki,**
**Yokohama Works**
**Yokohama-shi,**
**Kanagawa (JP)**

(74) Representative: **HOFFMANN EITLE**
**Patent- und Rechtsanwälte**
**Arabellastrasse 4**
**81925 München (DE)**

(56) References cited:
**EP-A- 0 911 926**     **EP-A- 1 054 275**
**EP-A- 1 072 909**     **EP-A- 1 202 477**
**EP-A- 1 271 193**     **US-A- 5 838 867**

• **TSUKITANI M ET AL: "Development of a long-haul large-capacity wavelength-division multiplexed optical transmission line" SEI TECHNICAL REVIEW, SUMITOMO ELECTRIC INDUSTRIES, OSAKA, JP, vol. 157, September 2000 (2000-09), pages 45-49, XP002941665 ISSN: 1343-4349**

• **TSUKITANI M ET AL: "LOW-NONLINEARITY DISPERSION-FLATTENED HYBRID TRANSMISSION LINES CONSISTING OF LOW-NONLINEARITY PURE-SILICA-CORE FIBERS AND DISPERSION COMPENSATING FIBERS" DENSHI JOHO TSUSHIN GAKKAI GIJUTSU KUNKYU HOKOKU - IEICE TECHNICAL REPORT, DENSHI JOHO TSUSHIN GAKKAI, TOKYO, JP, November 1999 (1999-11), pages 67-72, XP002941663 ISSN: 0913-5685**

• **HAINBERGER R ET AL: "Optimum span configuration of raman-amplified dispersion-managed fibers" OPTICAL FIBER COMMUNICATION CONFERENCE. (OFC). TECHNICAL DIGEST POSTCONFERENCE EDITION. ANAHEIM, CA, MARCH 17 - 22, 2001, TRENDS IN OPTICS AND PHOTONICS SERIES. TOPS. VOLUME 54, 17 March 2001 (2001-03-17), pages MI51-MI54, XP010546037 WAHINGTON, USA ISBN: 1-55752-655-9**

• **MORITA I ET AL: "Benefit of Raman amplification in ultra-long-distance 40 Gbit/s-based WDM transmission using dispersion-flattened fibre span" ELECTRONICS LETTERS, IEE STEVENAGE, GB, vol. 37, no. 8, 12 April 2001 (2001-04-12), pages 507-509, XP006016459 ISSN: 0013-5194**

• **TSUKITANI M ET AL: "LOW-LOSS DISPERSION-FLATTENED HYBRID TRANSMISSION LINES CONSISTING OF LOW-NONLINEARITY PURE SILICA CORE FIBRES AND DISPERSION COMPENSATING FIBRES" ELECTRONICS LETTERS, IEE STEVENAGE, GB, vol. 36, no. 1, 6 January 2000 (2000-01-06), pages 64-66, XP000970543 ISSN: 0013-5194**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**(Cont. next page)**

- MORITA I ET AL: "40 GBIT/S X 16 WDM TRANSMISSION OVER 2000 KM USING DISPERSION MANAGED LOW-NONLINEAR FIBER SPAN" PROCEEDINGS OF THE EUROPEAN CONFERENCE ON OPTICAL COMMUNICATION, XX, XX, vol. 4, 3 September 2000 (2000-09-03), pages 25-27, XP001079833

**Description**

The present invention relates to an optical transmission line suitable for transmitting signal light while Raman amplifying the signal light, and to an optical communication system including such an optical transmission line.

The distributed Raman amplification is a technique of supplying Raman amplification pumping light to an optical transmission line disposed between stations and thereby Raman amplifying the signal light while the signal light propagates through the optical transmission line. In an optical transmission line in which signal light is amplified by distributed Raman-amplification, the intrinsic transmission loss is canceled by the Raman amplification gain, and the effective transmission loss is reduced accordingly. This makes it possible to achieve long-haul transmission.

To improve the optical transmission quality, it is important to reduce the absolute value of the overall chromatic dispersion of the optical transmission line. To this end, there is a case in which an optical transmission line is formed by combining a first optical fiber and a second optical fiber together, wherein the first optical fiber has a positive chromatic dispersion and a large effective core area while the second optical fiber has a negative chromatic dispersion and a small effective core area. In this type of optical transmission line, to suppress signal degradation due to nonlinear optical phenomena, the first optical fiber is generally disposed on the upstream side of the optical transmission line, and the second optical fiber is disposed on the downstream side.

In this optical transmission line, the power of signal light propagating through the second optical fiber is small. The second optical fiber has a small effective core area and a high Raman amplification efficiency. Thus, it has been proposed to amplify the signal light by supplying Raman amplification pumping light to the second optical fiber.

Paper "Development of a long-haul large-capacity wavelength-division multiplexed optical transmission line", SEI Technical Review, Sumitomo Electric Industries, Osaka, JP, vol. 157, September 2000 pages 45-49 discloses a hybrid transmission line that incorporates large effective area PSCF with newly designed DCFs, taking into consideration transmission losses, average dispersion slope and nonlinearity. A hybrid optical line with an equivalent effective area of 60um$^2$ based upon this design typically exhibits a span loss as low as 0.205 dB/km (including splice losses), a span dispersion slope of 0.020ps/nm$^2$/km, and low nonlinearity, yielding a dispersion slope less than one fourth to one third that of prior art non-zero DSFs.

Paper "Optimum span configuration of raman- amplified dispersion-managed fibers", OFC Technical Digest Postconference edition, TOPS vol. 54, March 17, 2001, pages MI51-MI54 states that, while Raman pumping is attractive in combination with DMF due to the small effective area of negative dispersion fibers, the high non-linearity and the large Rayleigh scattering coefficient of the negative dispersion fibers cause additional impairments when Raman pumping is employed. In order to overcome this, the paper investigates the impact of the position of the negative dispersion fiber on the performance of Raman-amplified dispersion-managed fibers in 40Gbs systems. The result demonstrates that the configuration with the negative dispersion fiber placed in the center of the span provides the best balance between OSNR degradation, impact of double Rayleigh backscattering, and nonlinear impairments.

It is an object of the present invention to provide an optical transmission line and an optical communication system, which allow high-quality transmission of signal light using distributed Raman amplification.

According to the present invention there is provided an optical transmission line comprising a first optical fiber, a second optical fiber, and a third optical fiber, said first, second, and third optical fibers being connected together in this sequence and disposed between a signal light incidence position and signal light exit position, said first optical fiber having a first effective core area and a first positive chromatic dispersion at a wavelength of 1550 nm, said second optical fiber having a second effective core area and a second negative chromatic dispersion at a wavelength of 1550 nm, said third optical fiber having a third effective core area and a third positive chromatic dispersion at a wavelength of 1550 nm according to appended independent claim 1, and an optical communication system comprising a first optical fiber, a second optical fiber, a third optical fiber, and a Raman amplification pumping light source, said first, second, and third optical fibers being connected in this sequence so as to form an optical transmission line and disposed between a signal light incidence position and signal light exit position; said first optical fiber having a first effective core area and a first positive chromatic dispersion at a wavelength of 1550 nm, said second optical fiber having a second effective core area and a second negative chromatic dispersion at a wavelength of 1550 nm, said third optical fiber having a third effective core area and a third positive chromatic dispersion at a wavelength of 1550 nm according to appended independent claim 8. Preferred embodiments are defined in the appended dependent claims.

The present invention is further explained below by referring to the accompanying drawings. The drawings are provided solely for the purpose of illustration and are not intended to limit the scope of the invention.

For a better understanding of the invention and to show how the same may be carried into effect, reference will now be made, by way of example, to the accompanying drawings, in which:

Figure 1 is a schematic diagram illustrating an optical communication system 1 and an optical transmission line 10 according to a first arrangement;
Figure 2 is a diagram illustrating a refractive index profile of an optical fiber 12;

Figure 3 is a graph showing the relationship between the relative refractive index difference $\Delta n_1$ and the performance of the optical transmission line 10;

Figure 4 is an enlarged partial diagram of Fig. 3;

Figure 5 is a graph showing the relationship between the relative refractive index difference $\Delta n_1$ and the power of Raman amplification pumping light adjusted so that the effective transmission loss of the optical transmission line 10 becomes equal to 0;

Figure 6 is a schematic diagram illustrating an optical communication system 2 and an optical transmission line 20 according to a first embodiment of the present invention;

Figure 7 is a graph showing the relationship between the relative refractive index difference $\Delta n_1$ and the performance of the optical transmission line 20;

Figure 8 is an enlarged partial diagram of Fig. 7;

Figure 9 is a graph showing the relationship between the relative refractive index difference $\Delta n_1$ and the power of Raman amplification pumping light adjusted so that the effective transmission loss of the optical transmission line 20 becomes equal to 0;

Figure 10 is a graph showing the relationship between the relative refractive index difference $\Delta n_1$ and the performance of the optical transmission line in the first arrangement and first embodiment;

Figure 11 is a graph showing the relationship between the relative refractive index difference $\Delta n_1$ and the power of Raman amplification pumping light in the first arrangement and first embodiment;

Figure 12 is a graph showing the relationship between the location of the optical fiber 12 and the performance of the optical transmission line 20, for a case in which forward pumping is employed in the first embodiment;

Figure 13 is a graph showing the relationship between the location of the optical fiber 12 and the performance of the optical transmission line 20, for a case in which backward pumping is employed in the first embodiment; and

Figure 14 is a graph showing the relationship between the location of the optical fiber 12 and the performance of the optical transmission line 20, for a case in which bi-directional pumping is employed in the first embodiment.

According to a first arrangement , to achieve the above object, there is provided an optical transmission line comprising a first optical fiber having a length of $L_1$, a first effective core area, and a first positive chromatic dispersion, and a second optical fiber having a length of $L_2$, a second effective core area, and a second negative chromatic dispersion, wherein the first and second optical fibers are connected together. In this optical transmission line, the second optical fiber includes a core, a cladding, and a depressed region which is disposed between the core and the cladding and has a refractive index smaller than refractive indexes of the core and cladding, the second effective core area is smaller than the first effective core area, the second chromatic dispersion is smaller in absolute value than the first chromatic dispersion, and the ratio ($L_2/(L_1 + L_2)$) is not less than 0.5. Herein, the values of the effective core areas and the chromatic dispersions are those at a wavelength of 1550 nm.

In an optical transmission line according to the first arrangement, the ratio ($L_2/(L_1 + L_2)$) may be not less than 0.55 and not more than 0.60. The second optical fiber may be disposed on the downstream side of the first optical fiber. The first effective core area may be not less than 100 $\mu m^2$, and the second effective core area may be not less than 20 $\mu m^2$. The relative refractive index difference of the core of the second optical fiber to the cladding may be not less than 0.9% and not more than 1.0%.

According to an aspect of the present invention, there is also provided an optical transmission line comprising a first optical fiber having a length of $L_1$ a first effective cores area, and a first chromatic dispersion being positive, a second optical fiber having a length of $L_2$, a second effective core area, and a second chromatic dispersion being negative, and a third optical fiber having a length of $L_3$ a third effective core area, and a third chromatic dispersion being positive, wherein the first, second, and third optical fibers are connected in this sequence between the signal light incidence position and the signal light exit position. In this optical transmission line, the second optical fiber includes a core, a cladding, and a depressed region which is disposed between the core and the cladding and has a refractive index smaller than refractive indexes of the core and the cladding, the second effective core area is smaller than the first effective core area and the third effective core area, the second chromatic dispersion is not less than -73 ps/nm/km and not more than -46 ps/nm/km, and the ratio $L_2/(L_1 + L_2 + L_3)$ is not less than 0.2 and not more than 0.4. Herein, the values of the effective core areas and the chromatic dispersions are those at a wavelength of 1550 nm.

In the optical transmission line according to the aspect of the present invention, the first effective core area may be not less than 100 $\mu m^2$, the second effective core area may be not less than 15 $\mu m^2$, and the third effective core area may be not less than 100 $\mu m^2$. The relative refractive index difference of the core of the second optical fiber to the cladding may not less than 1.4% and not more than 1.8%. The ratio $R=((L_1 + 0.5L_2)/(L_1 + L_2 + L_3))$ may be not less than 0.4 and not more than 0.5, and Raman amplification pumping light used for Raman amplification of signal light may be supplied from the side of the light emerging-out position. Alternatively, the ratio R may be not less than 0.5 and not more than 0.7, and Raman amplification pumping light used for Raman amplification of signal light may be supplied both from the side of the light incidence position and from the side of the light emerging-out position.

There is also described an optical communication system comprising a first or second optical transmission line and a Raman amplification pumping light source for supplying Raman amplification pumping light to the optical transmission line such that the optical communication system is capable of transmitting signal light through the optical transmission line while Raman amplifying the signal light propagating through the optical transmission line.

In the drawings, the same number refers to the same part to avoid duplicate explanation. The ratios of the dimensions in the drawings do not necessarily coincide with the explanation.

First Arrangement

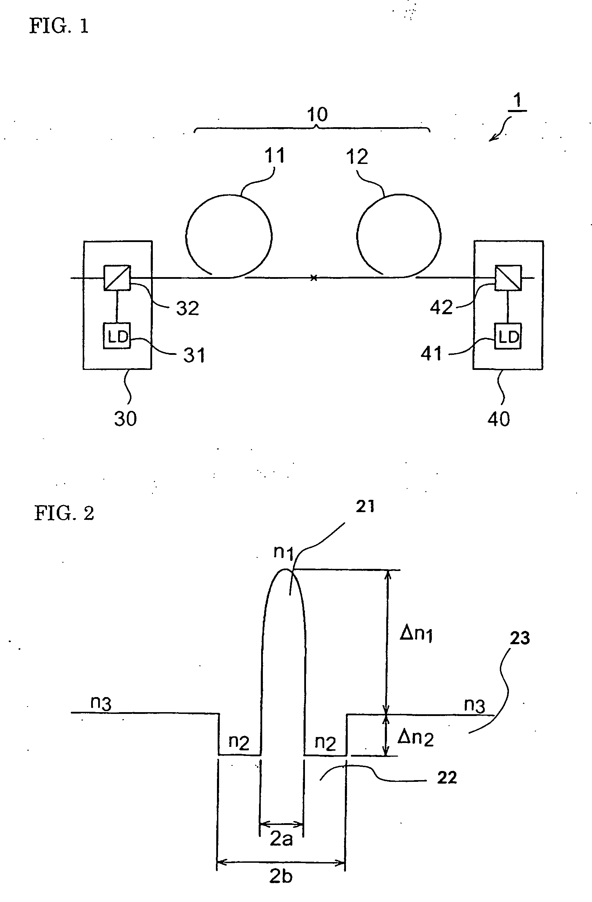

First, an optical communication system and an optical transmission line according to a first arrangement of the present invention are described. Figure 1 is a schematic diagram illustrating the optical communication system 1 and the optical transmission line 10 according to the first arrangement of the present invention. In this optical communication system 1, the optical transmission line 10 is disposed between an optical repeater (or optical transmitter) 30 and an optical repeater (or optical receiver) 40. The optical transmission line 10 includes a first optical fiber 11 and a second optical fiber 12 which are connected together by means of fusion splicing.

The optical fiber 11 has a relatively large effective core area $A_{eff\,1}$ and a positive chromatic dispersion $D_1$ at a wavelength of 1550 nm. The optical fiber 11 includes a core made of pure silica glass including the center of an optical axis, and a cladding doped with fluorine and formed around the core. Because the core is made of pure silica glass, the optical fiber 11 has a low transmission loss.

On the other hand, the optical fiber 12 has a relatively small effective core area $A_{eff2}$ and a negative chromatic dispersion $D_2$ at a wavelength of 1550 nm so that the chromatic dispersion of the optical fiber 11 is compensated by the optical fiber 12. The optical fiber 12 has a refractive index profile such as that shown in Fig. 2. That is, the optical fiber 12 includes a core 21 having a refractive index $n_1$ and including an optical axis, a depressed region 22 having a refractive index $n_2$, and a cladding 23 having a refractive index $n_3$, wherein. $n_1 > n_3 > n_2$. The optical fiber 12 is formed using silica glass as a base material.

The core 21 may be doped with germanium oxide ($GeO_2$) and the depressed region 22 may be doped with fluorine. The optical fiber 12 is made to exhibit negative chromatic dispersion $D_2$ by properly setting the ratio Ra (=a/b) between the outer diameter 2a of the core 21 and the outer diameter 2b of the depressed region 22, the relative refractive index difference $\Delta n_1$ of the core 21 relative to the cladding 23, and the relative refractive index difference $\Delta n_2$ of the depressed region 22 to the cladding 23.

It is also preferable that the optical fiber 12 further includes a ring portion with a refractive index $n_4$ disposed between the depressed region 22 and the cladding 23, and the refractive indexes are set such that $n_1 > n_4 > n_3 > n_2$. Furthermore, the optical fiber 12 may include two or more depressed regions 22 with a low refractive index, although the purposes of the present invention can be achieved if the optical fiber 12 includes at least one depressed region 22.

At the optical signal wavelength, the effective core areas $A_{eff1}$ and $A_{eff2}$, and the chromatic dispersions $D_1$ and $D_2$ satisfy the following relationships:

$$A_{eff2} < A_{eff1} \qquad \cdots (1a)$$

$$D_2 < 0 < |D_2| < D_1 \qquad \cdots (1b)$$

The length $L_1$ of the optical fiber 11 and the length $L_2$ of the optical fiber 12 satisfy the following relationship:

$$\frac{L_2}{L_1 + L_2} \geq 0.5 \qquad \cdots (2)$$

and, more preferably, satisfy the following relationship:

$$0.55 \leq \frac{L_2}{L_1 + L_2} \leq 0.60 \quad \cdots (3)$$

To reduce the nonlinearity, it is preferable that the effective core area $A_{eff1}$ be not less than 100 $\mu m^2$ at the signal light wavelength, the effective core area $A_{eff2}$ be not less than 20 $\mu m^2$, and the relative refractive index difference $\Delta n_1$ be not less than 0.9% and not more than 1.0%.

The optical repeater 30 includes an pumping light source 31 and an optical coupler 32. The pumping light source 31 emits pumping light used for Raman amplification, and the optical coupler 32 supplies the pumping light to the optical fiber 11. More specifically, the optical repeater 30 supplies the Raman amplification pumping light to the optical transmission line 10 frontward. The Raman amplification pumping light has a wavelength shorter than the signal light wavelength by about 100 nm.

Similarly, the optical repeater 40 includes an pumping light source 41 and an optical coupler 42. The optical repeater 40 supplies the Raman amplification pumping light to the optical transmission line 10 backward.

In this optical communication system 1, the Raman amplification pumping light emitted from the pumping light source 31 is sequentially supplied to the optical fiber 11 and then to optical fiber 12. On the other hand, the Raman amplification pumping light emitted from the pumping light source 41 is sequentially supplied first to the optical fiber 12 and then to optical fiber 11. Signal light propagates first through the optical fiber 11 and then through the optical fiber 12 and reaches the optical repeater 40, wherein the signal light is amplified by means of Raman amplification during the propagation through the optical fibers.

In the optical communication system 1 and the optical transmission line 10 according to the present arrangement, the effective core areas $A_{eff1}$ and $A_{eff2}$, the chromatic dispersions $D_1$ and $D_2$, and the lengths $L_1$ and $L_2$ are set such that the relationships described above are satisfied, thereby achieving high performance in terms of both the optical signal-to-noise ratio and nonlinearity and thus achieving high-quality transmission of signal light using distributed Raman amplification.

Specific examples of the optical communication system 1 and the optical transmission line 10 according to the first arrangement are described below. Table shows various parameters of the optical fibers which were actually used to form the optical transmission line 10.

Table I

| Fiber | 11 | 12a | 12b | 12c | 12d | 12e | 12f | 12g | 12h | Reference |
|---|---|---|---|---|---|---|---|---|---|---|
| Relative Index difference | | 0.8 | 0.9 | 1.0 | 1.2 | 1.4 | 1.6 | 1.8 | 2.0 | |
| Loss at 1450 nm dB/km | 0.2 | 0.25 | 0.25 | 0.25 | 0.26 | 0.28 | 0.32 | 0.39 | 0.50 | 0.25 |
| Loss at 1550 nm dB/km | 0.17 | 0.21 | 0.21 | 0.21 | 0.22 | 0.24 | 0.27 | 0.31 | 0.37 | 0.20 |
| Chromatic dispersion ps/nm/km | 20.4 | -7.8 | -14.1 | -17.1 | -30.3 | -46.0 | -58.2 | -72.4 | -86.0 | 8.0 |
| Dispersion slope ps/nm$^2$/km | 0.059 | -0.021 | -0.040 | -0.048 | -0.087 | -0.133 | -0.164 | -0.210 | -0.253 | 0.060 |
| Effective core area $\mu$ m$^2$ | 110 | 31.0 | 28.1 | 26.4 | 22.9 | 20.5 | 18.8 | 17.5 | 16.3 | 65.3 |
| Gain coefficiency | 0.28 | 1.08 | 1.24 | 1.38 | 1.7 | 2.05 | 2.41 | 2.80 | 3.26 | 0.49 |
| Non-linear index | 2.8 | 3.4 | 3.4 | 3.5 | 3.7 | 3.8 | 3.9 | 4.1 | 4.2 | 2.9 |
| L2/(L1 + L2) | | 72.3 | 59.1 | 54.4 | 40.2 | 30.7 | 26.0 | 22.0 | 19.2 | |

As for the optical fiber 11, a single-mode optical fiber including a core made of pure silica glass and having a zero-dispersion wavelength near 1.3 $\mu$m was used.

Optical fibers 12a to 12h actually employed as the optical fiber 12 had a relative refractive index difference $\Delta n_1$ in the range from 0.8% to 2.0% and a transmission loss in the range from 0.25 to 0.50 dB/km at a wavelength of 1450 nm and from 0.21 to 0.37 dB/km at a wavelength of 1550 nm. Furthermore, the chromatic dispersion thereof was in the range from -7.8 to - 86.0 ps/nm/km, the dispersion slope was in the range from -0.021 to -0.253 ps/nm$^2$/km, the effective core area was in the range from 31.0 to 16.3 $\mu$m$^2$, the Raman amplification gain factor ($g_R/A_{eff}$) was in the range from 1.08 to 3.26 /W/km, and the nonlinear refractive index $n_2$ was in the range from 3.4 $\times$ 10$^{-20}$ to 4.2 $\times$ 10$^{-20}$ m$^2$/W. The values described herein are those measured at a wavelength of 1550 nm except for the transmission loss. The parameters of the optical fibers 12a to 12h were set so that the bending loss for a bending diameter of 20 mm$\phi$ at a wavelength of 1550 nm became 10 dB/m.

In the present example, the optical transmission line 10 was formed by connecting one of optical fibers 12a to 12h to the optical fiber 11. The length of each optical fiber was adjusted so that the overall chromatic dispersion of the whole optical transmission line 10 became 0 at a wavelength of 1550 nm. The total length, $L_1 + L_2$, of the optical transmission line 10, was set to 100 km. The signal light wavelength was set to 1550 nm, and Raman amplification pumping light with a wavelength of 1450 nm was employed. Optical signal power of 0 dBm was input to the optical transmission line 10. The power of the Raman amplification pumping light was adjusted so that the effective transmission loss of the optical transmission line 10 became equal to 0, that is, so that the power of the signal light output from the optical transmission line 10 became equal to the power of the signal light input to the optical transmission line 10. The performance of the optical transmission line 10 in the case of using the distributed Raman amplification was evaluated in comparison with the performance achieved by a reference system which was formed by connecting an optical transmission line including only a reference optical fiber (i.e., a dispersion shifted fiber having a zero-dispersion wavelength shifted from 1.3 $\mu$m to a longer wavelength) to an erbium-doped fiber amplifier (EDFA) having a signal-to-noise ratio of 5 dB. Herein, the performance (PFM) of the optical transmission line 10 is defined as follows:

$$\text{PFM= improvement of OSNR + improvement of nonlinearity} \quad \cdots \text{(4a)}$$

In this definition,

$$\text{Improvement of OSNR} = 10 \cdot \log \text{OSNR}_{\text{Raman}}/\text{OSNR}_{\text{basis}} \quad \cdots \text{(4b)}$$

$$\text{Improvement of nonlinearity} = 10 \cdot \log \Delta\phi_{\text{Raman}}/\Delta\phi_{\text{basis}} \quad \cdots \text{(4c)}$$

where $\text{OSNR}_{\text{Raman}}$ and $\Delta\phi_{\text{Raman}}$ are the optical signal-to-noise ratio and the phase shift, respectively, for the optical transmission line 10, and $\text{OSNR}_{\text{basis}}$ and $\Delta\phi_{\text{basis}}$ are those for the reference system. The phase shift $\Delta\phi_{\text{Raman}}$ is the overall phase shift of the optical transmission line 10 caused by self phase modulation, for fixed power of light incident on the optical transmission line 10. The optical signal-to-noise ratio $\text{OSNR}_{\text{basis}}$ was calculated on the assumption that the degradation of the optical signal-to-noise ratio of the EDFA was 5 dB. In the phase shift $\Delta\phi_{\text{basis}}$, the phase shift of the EDFA was ignored, because the length of the EDFA is much shorter than the length of the optical transmission line.

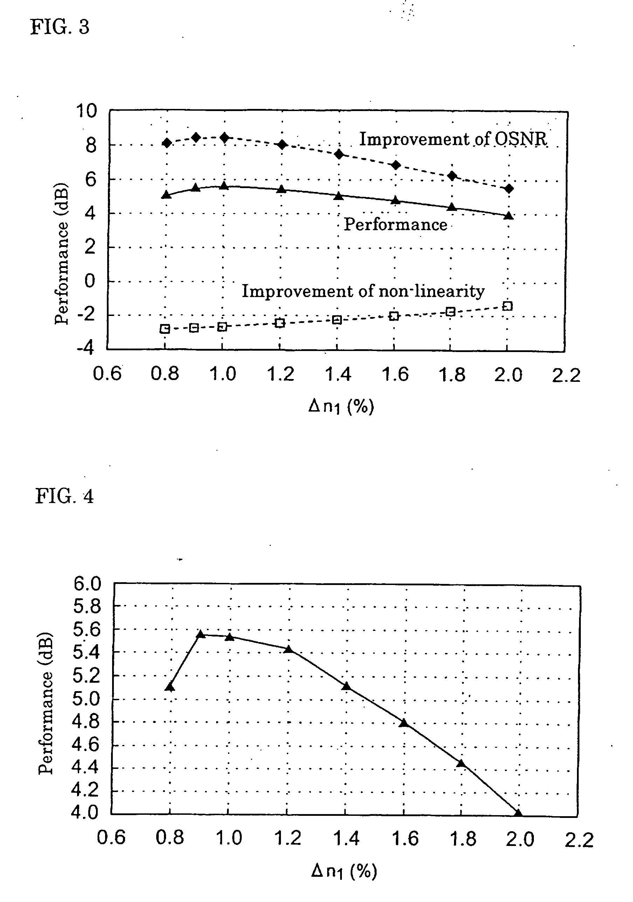

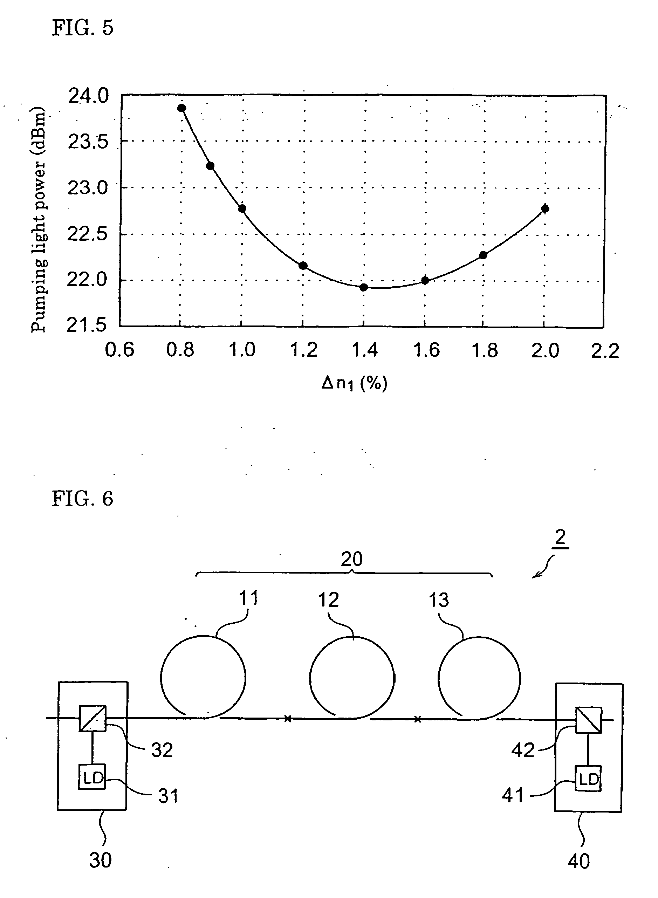

Figures 3 and 4 are graphs showing the relationship between the relative refractive index difference $\Delta n_1$ of the optical fiber 12 and the PFM of the optical transmission line 10. In Fig. 3, the improvement of OSNR and the improvement of nonlinearity are also shown in addition to the PFM. Figure 4 is an enlarged partial graph of Fig. 3 showing the PFM. Figure 5 is a graph showing the relationship between the relative refractive index difference $\Delta n_1$ and the power of Raman amplification pumping light adjusted so that the effective transmission loss of the optical transmission line 10 became equal to 0.

As can be seen from Figs. 3 and 4, a greater reduction in the nonlinearity of the optical transmission line 10 was obtained with increasing relative refractive index difference $\Delta n_1$. That is, less significant degradation due to nonlinear optical phenomena occurred in the area of large $\Delta n_1$. This is consistent with the fact that the larger the relative refractive index difference $\Delta n_1$ of the optical fibers 12a through 12h, the shorter is the required length $L_2$. The improvement of the OSNR was greater than the improvement of the nonlinearity for all values of the relative refractive index difference $\Delta n1$, and a greatest improvement of the OSNR was obtained when the relative refractive index difference $\Delta n_1$ was about 1.0%. Highest performance was obtained when the relative refractive index difference $\Delta n_1$ was in the range of 0.9% to 1.0%. In other words, in the optical communication system 1 or the optical transmission line 10, optimum distributed Raman amplification can be achieved by setting the relative refractive index difference $\Delta n_1$ of the optical fiber 12 within the range of 0.9% to 1.0%. High performance was obtained when the ratio ($L_2/(L_1 + L_2)$) of the length of the optical fiber 12 to the total length of the optical transmission line 10 was not less than 0.5, and the highest performance was obtained when the ratio was not less than 0.55 and not more than 0.60.

First Embodiment

An optical communication system and an optical transmission line according to a first embodiment of the present invention are described below. Figure 6 is a schematic diagram illustrating the optical communication system 2 and the optical transmission line 20 according to the first embodiment of the present invention. In this optical communication system 2, an optical transmission line 20 is disposed between an optical repeater 30 and an optical repeater 40. The optical transmission line 20 includes a first optical fiber 11, a second optical fiber 12, and a third optical fiber 13, which are connected in this sequence means of fusion splicing.

The optical fibers 11 and 12 and the optical repeaters 30 and 40 are similar to those employed in the first arrangement. However, the optical transmission line 20 is different from the optical transmission line 10 in that it further includes the optical fiber 13 in addition to the optical fiber 11 and the optical fiber 12.

The optical fiber 13 is similar to the optical fiber 11, and has a relatively large effective core area $A_{\text{eff3}}$ and a positive chromatic dispersion $D_3$ at signal light wavelength. The optical fiber 13 includes a core made of pure silica glass including an optical axis, and a cladding doped with fluorine and formed around the core. Because the core is made of pure silica glass, the optical fiber 13 has a low transmission loss.

At the optical signal wavelength, the effective core areas $A_{\text{eff1}}$, $A_{\text{eff2}}$, and $A_{\text{eff3}}$, and the chromatic dispersion $D_2$ satisfy the following relationships:

$$A_{eff2} < A_{eff1} \qquad\qquad \cdots (5a)$$

$$A_{eff2} < A_{eff3} \qquad\qquad \cdots (5b)$$

$$-73\,ps/nm/km \le D_2 \le -46\,ps/nm/km \qquad \cdots (5c)$$

The length $L_1$ of the optical fiber 11, the length $L_2$ of the optical fiber 12, and the length $L_3$ of the optical fiber 13 satisfy the following relationship:

$$0.2 \le \frac{L_2}{L_1 + L_2 + L_3} \le 0.4 \qquad \cdots (6)$$

To reduce the nonlinearity, it is preferable that the effective core area $A_{eff1}$ be not less than 100 $\mu m^2$ at the signal light wavelength, the effective core area $A_{eff2}$ be not less than 15 $\mu m^2$, the effective core area $A_{eff3}$ be not more than 100 $\mu m^2$, and the relative refractive index difference $\Delta n_1$ be not less than 1.4% and not more than 1.8%.

Furthermore, it is preferable that the ratio R = $(L_1 + 0.5L_2)/(L_1 + L_2 + L_3)$ be not less than 0.4 and not more than 0.5, and Raman amplification pumping light be supplied to the optical fiber 13 from the optical repeater 40.

Alternatively, the ratio R may be in the range not less than 0.5 and not more than 0.7, and Raman amplification pumping light may be supplied to the optical fiber 13 from the optical repeater 40 and also to the optical fiber 11 from the optical repeater 30.

In this optical communication system 2, the Raman amplification pumping light emitted from the pumping light source 31 is supplied via a optical coupler 32 to the optical fiber 11, the optical fiber 12, and the optical fiber 13 in this sequence. On the other hand, the Raman amplification pumping light emitted from the pumping light source 41 is supplied via a optical coupler 42 to the optical fiber 13, the optical fiber 12, and the optical fiber 11 from in this sequence. The signal light output from the optical repeater 30 propagates through the optical fiber 11, the optical fiber 12, and the optical fiber 13 in this sequence and is amplified by means of Raman amplification during the propagation to reach the optical repeater 40.

In the optical communication system 2 and the optical transmission line 20 according to the present embodiment, distributed Raman amplification and high-quality transmission of signal light are made possible by setting the effective core areas $A_{eff1}$, $A_{eff2}$, and $A_{eff3}$, the chromatic dispersions $D_1$, $D_2$, and $D_3$, and the lengths $L_1$, $L_2$, and $L_3$ so as to satisfy the relationships described above.

Specific examples of the optical communication system 2 and the optical transmission line 20 according to the first embodiment are described below. In the examples, an optical fiber 11, optical fibers 12a to 12h, and a reference optical fiber, having characteristics or parameters similar to those shown in Table were used. As for the optical fiber 13, an optical fiber similar to the optical fiber 11 whose characteristics or parameters are shown in Table was used, and the length of the optical fiber 13 was set to be equal to the length of the optical fiber 11.

In the present examples, the optical fiber 11, one of the optical fibers 12a through 12h, and the optical fiber 13 were connected together in this sequence so as to form the optical transmission line 20. The length of each optical fiber was adjusted so that the overall chromatic dispersion of the whole optical transmission line 20 became 0 at a wavelength of 1550 nm. The total length, $L_1 + L_2 + L_3$, of the optical transmission line 20 was set to 100 km. A signal light wavelength was set to 1550 nm, and Raman amplification pumping light with a wavelength of 1450 nm was employed. Optical signal power of 0 dBm was input to the optical transmission line 20. The power of the Raman amplification pumping light was adjusted so that the effective transmission loss of the optical transmission line 20 became equal to 0. The performance of the optical transmission line 20 using distributed Raman amplification was evaluated in a similar manner as in the first arrangement in accordance with equations (4a) to (4c).

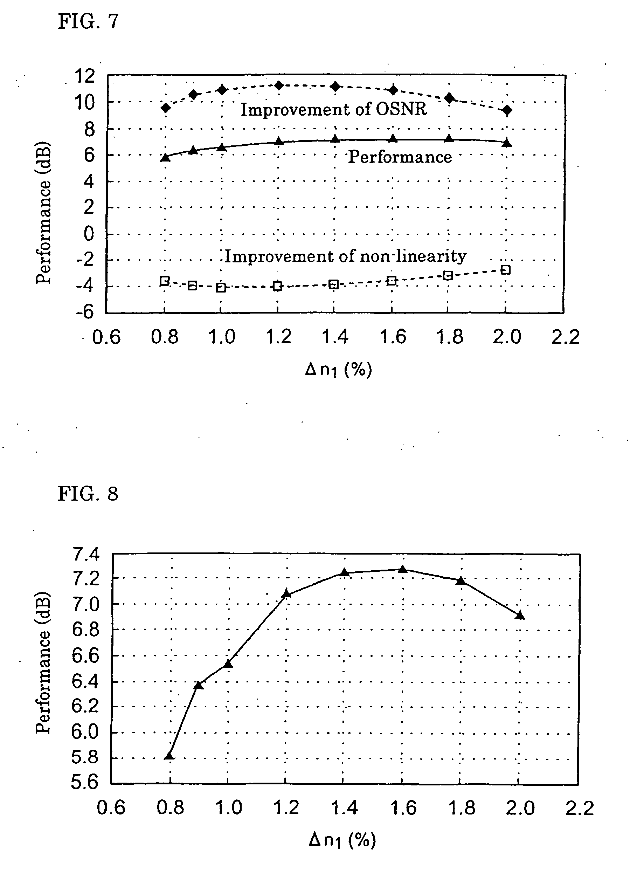

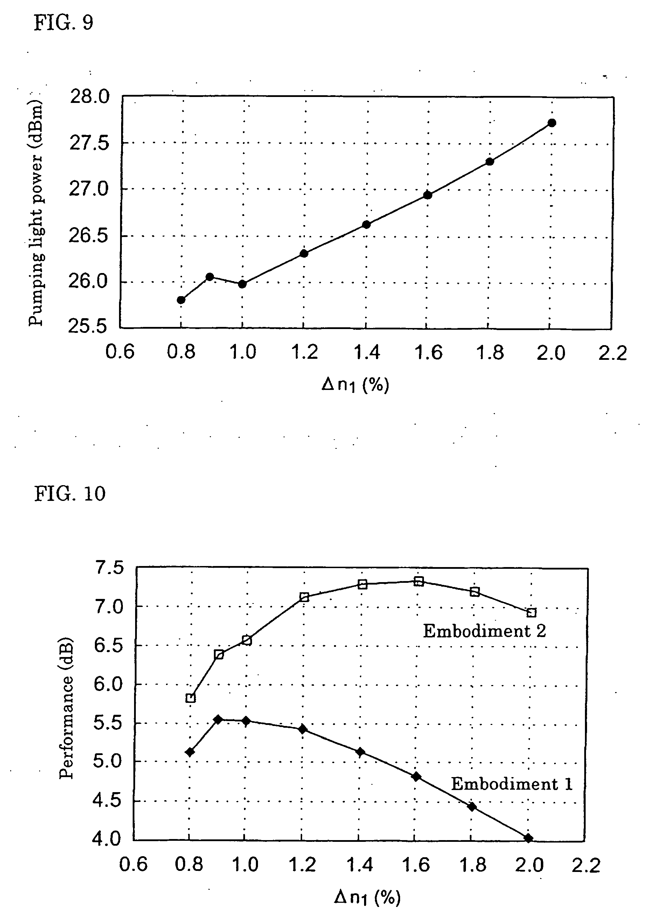

Figures 7 and 8 are graphs showing the relationship between the relative refractive index difference $\Delta n_1$ of the optical fiber 12 and the PFM of the optical transmission line 20. In Fig. 7, the improvement of OSNR and the improvement of nonlinearity are also shown in addition to the PFM. Figure 8 is an enlarged partial graph of Fig. 7 showing the PFM. Figure 9 is a graph showing the relationship between the relative refractive index difference $\Delta n_1$ of the optical fiber 12 and the power of Raman amplification pumping light adjusted so that the effective transmission loss of the optical transmission line 20 became equal to 0.

As can be seen from Figs. 7 and 8, a reduction in the nonlinearity of the optical transmission line 20 became small when the relative refractive index difference $\Delta n_1$ was about 1.2%. That is, significant degradation due to nonlinear optical phenomena occurred. The improvement of OSNR was greater than the improvement of nonlinearity for all values of the relative refractive index difference $\Delta n_1$, and a greatest improvement of OSNR was obtained when the relative refractive index difference $\Delta n_1$ was about 1.0%. Highest performance was achieved when the relative refractive index difference $\Delta n_1$ was 1.4% to 1.8%. That is, in the optical communication system 2 or the optical transmission line 20, optimum distributed Raman amplification can be achieved by setting the relative refractive index difference $\Delta n_1$ of the optical fiber 12 within the range of 1.4% to 1.8%. The highest performance was obtained when the ratio of the length of the optical fiber 12 to the total length of the optical transmission line 20 ($L_2/(L_1 + L_2 + L_3)$) was not less than 0.2 and not more than 0.4 and in that case the chromatic dispersion $D_2$ of the optical fiber 12 was not less than -73 ps/nm/km and not more than 46 ps/nm/km.

Figure 10 is a graph showing the relationship between the relative refractive index difference $\Delta n_1$ of the optical fiber 12 and the PFM of the optical transmission line, obtained in the first arrangement and first embodiments. As can be seen from Fig. 10, the PFM obtained in the first embodiment was higher than that achieved in the first arrangement, regardless of which of the optical fibers 12a to 12h was employed.

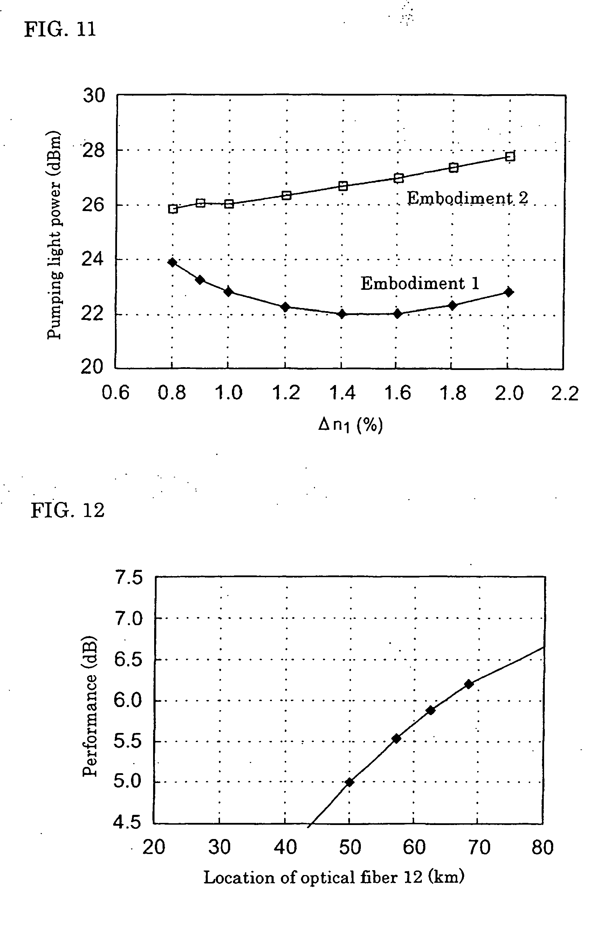

Figure 11 is a graph showing the relationship between the relative refractive index difference $\Delta n_1$ of the optical fiber 12 and the power of Raman amplification pumping light adjusted so that the effective transmission loss became 0 in the first arrangement and first embodiment. As can be seen from Fig. 11, the required power of Raman amplification pumping light was greater in the first embodiment than in the first arrangement, regardless as to which of the optical fibers 12a to 12h was employed.

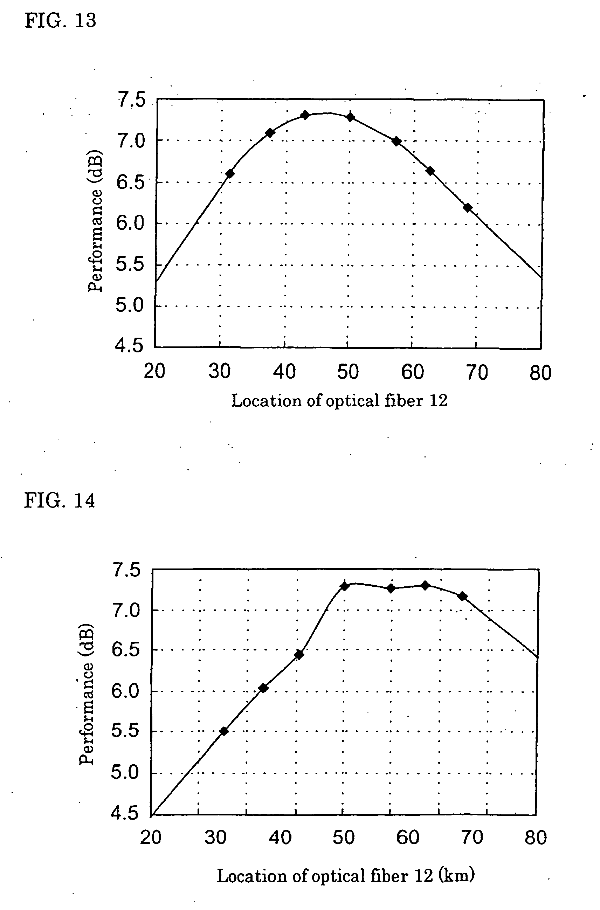

In the example of the first embodiment described above, the length $L_1$ and the length $L_3$ were equal to each other, and the optical fiber 12 was disposed in the middle of the optical transmission line 20. The dependence of the PFM of the optical transmission line 20 on the location of the optical fiber 12 is described below for respective cases of forward pumping, backward pumping, and bi-directional pumping. Figures 12 to 14 are graphs showing the relationship between the PFM of the optical transmission line 20 and the location of the optical fiber 12, according to the first embodiment. Figure 12 shows the PFM of the optical transmission line 20 for a case in which Raman amplification pumping light is supplied backwardly to the optical transmission line 20 only from the optical repeater 40. Figure 14 shows the PFM of the optical transmission line 20 for a case in which Raman amplification pumping light is supplied in both directions to the optical transmission line 20 from the optical repeaters 30 and 40. In these figures, the horizontal axis represents the location of the center of the optical fiber 12. Herein, an optical fiber 12f shown in Table I was employed as the optical fiber 12.

The PFM shown in Fig. 12 tends to be lower than that shown in Fig. 13 and than that shown in Fig. 14. This is because the forward pumping needs greater optical signal power input to the optical fiber 11 compared with the backward pumping and the bi-directional pumping, and thus the forward pumping tends to cause nonlinear optical phenomena to occur. That is, the backward pumping and the bi-directional pumping are superior to the forward pumping.

In the case of the backward pumping (Fig. 13), the optical transmission line 20 has high performance and the variation in the PFM due to the change in the location of the optical fiber 12 is relatively small if the center of the optical fiber 12 is located at a position within the range from the center of the optical transmission line 20 to a point shifted by 10% in a direction toward the front-end side, that is, if the ratio ($(L_1 + 0.5L_2)/(L_1 + L_2 + L_3)$) is not less than 0.4 and not more than 0.5. This means that it is not necessary to precisely control the length of each optical fiber used to form the optical transmission line 20, as long as the location of the optical fiber 12 is within the above-described range. This is advantageous from the point of view of the production control and production cost.

In the case of the bi-directional pumping (Fig. 14), the optical transmission line 20 has high performance and the variation in the PFM is small if the center of the optical fiber 12 is located within the range from the center of the optical transmission line 20 to a point shifted by 20% in a direction toward the rear-end side, that is, if the ratio R is within the range from 0.5 to 0.7. Also in this case, it is not necessary to precisely control the length of each optical fiber used to form the optical transmission line 20, as long as the location of the optical fiber 12 is within the above-described range. This is advantageous from the point of view of the production control and production cost.

**Claims**

1. An optical transmission line (20) comprising a first optical fiber (11), a second optical (12) fiber, and a third optical fiber (13), said first, second, and third optical fibers being connected together in this sequence and disposed between a signal light incidence position and signal light exit position, said first optical fiber having a first effective core area and a first positive chromatic dispersion at a wavelength of 1550 nm, said second optical fiber having a second effective core area and a second negative chromatic dispersion at a wavelength of 1550 nm, said third optical fiber having a third effective core area and a third positive chromatic dispersion at a wavelength of 1550 nm, wherein said second effective core area is smaller than said first effective core area and said third effective core area; when the length of the first optical fiber, the length of the second optical fiber, and the length of the third optical fiber are represented by $L_1$, $L_2$, and $L_3$, respectively, the ratio ($L_2/(L_1 + L_2 + L_3)$) is not less than 0.2 and not more than 0.4; and the lengths of the first, second and third optical fibers are arranged such that the overall chromatic dispersion of the whole optical transmission line is zero at a wavelength of 1550 nm; **characterised in that**
said second optical fiber (12) includes a core including the center of an optical axis, a cladding disposed around said core, and a depressed region disposed between said core and said cladding, said depressed region having a refractive index ($n_2$) smaller than the refractive indexes of said core ($n_1$) and said cladding ($n_3$); and **in that**
said second chromatic dispersion is not less than -73 ps/nm/km and not more than -46 ps/nm/km.

2. An optical transmission line (20) according to Claim 1, wherein said first effective core area is not less than 100 $\mu m^2$.

3. An optical transmission line (20) according to Claim 1, wherein said second effective core area is not less than 15 $\mu m^2$.

4. An optical transmission line (20) according to Claim 1, wherein said third effective core area is not less than 100 $\mu m^2$.

5. An optical transmission line (20) according to Claim 1, wherein the relative refractive index difference of said core to the cladding of said second optical fiber is not less than 1.4% and not more than 1.8%.

6. An optical transmission line (20) according to Claim 1, wherein the ratio (($L_1 + 0.5L_2)/(L_1 + L_2 + L_3)$) is not less than 0.4 and not more than 0.5, and Raman amplification pumping light used for Raman amplification of signal light is supplied from said light exit position.

7. An optical transmission line (20) according to Claim 1, wherein the ratio (($L_1 + 0.5L2) / (L_1 + L_2 + L_3)$) is not less than 0.5 and not more than 0.7, and Raman amplification pumping light used for Raman amplification of signal light is supplied from said light incidence position and said light exit position.

8. An optical communication system comprising a first optical fiber (11), a second optical fiber (12), a third optical fiber (13), and a Raman amplification pumping light source (31, 41), said first, second, and third optical fibers being connected in this sequence so as to form an optical transmission line (20) and disposed between a signal light incidence position and signal light exit position; said first optical fiber having a first effective core area and a first positive chromatic dispersion at a wavelength of 1550 nm, said second optical fiber having a second effective core area and a second negative chromatic dispersion at a wavelength of 1550 nm, said third optical fiber having a third effective core area and a third positive chromatic dispersion at a wavelength of 1550 nm, wherein
said second effective core area is smaller than said first effective core area and said third effective core area; and wherein
the optical communication system is arranged such that signal light is amplified by means of Raman amplification while the signal light propagates through said optical transmission line;
when the length of the first optical fiber, the length of the second optical fiber, and the length of the third optical fiber are represented by $L_1$, $L_2$, and $L_3$, respectively, the ratio ($L_2/(L_1 + L_2 + L_3)$) is in the range from 0.2 to 0.4; and the lengths of the first, second and third optical fibers are arranged such that the overall chromatic dispersion of the whole optical transmission line is zero at a wavelength of 1550 nm; **characterised in that**
said second optical fiber includes a core including the center of an optical axis, a cladding disposed around said core, and a depressed region disposed between said core and said cladding, said depressed region having a refractive index ($n_2$) smaller than refractive indexes of said core ($n_1$) and said cladding ($n_3$); and **in that**
said second chromatic dispersion is not less than -73 ps/nm/km and not more than -46 ps/nm/km.

**Patentansprüche**

1. Optische Übertragungsleitung (20), die eine erste optische Faser (11), eine zweite optische Faser (12) und eine dritte optische Faser (13) umfasst, wobei die erste, zweite und dritte optische Faser in dieser Abfolge miteinander verbunden sind und zwischen einer Signallicht-Eintrittsposition und einer Signallicht-Austrittsposition angeordnet sind, wobei die erste optische Faser eine erste wirksame Kernfläche und eine erste positive chromatische Dispersion bei einer Wellenlänge von 1550 nm hat, wobei die zweite optische Faser eine zweite wirksame Kernfläche und eine zweite negative chromatische Dispersion bei einer Wellenlänge von 1550 nm hat, wobei die dritte optische Faser eine dritte wirksame Kernfläche und eine dritte positive chromatische Dispersion bei einer Wellenlänge von 1550 nm hat, wobei

die zweite wirksame Kernfläche kleiner als die erste wirksame Kernfläche und die dritte wirksame Kernfläche ist; wenn die Länge der ersten optischen Faser, die Länge der zweiten optischen Faser und die Länge der dritten optischen Faser durch $L_1$, $L_2$ bzw. $L_3$ dargestellt sind, das Verhältnis $(L_2/L_1 + L_2 + L_3))$ nicht geringer als 0,2 und nicht mehr als 0,4 ist; und

die Längen der ersten, der zweiten und der dritten optischen Faser so angeordnet sind, dass die gesamte chromatische Dispersion der ganzen optischen Übertragungsleitung bei einer Wellenlänge von 1550 nm Null ist;

**dadurch gekennzeichnet, dass**

die zweite optische Faser (12) einen Kern mit der Mitte einer optischen Achse, eine um den Kern herum angeordnete Ummantelung und eine zwischen dem Kern und der Ummantelung angeordnete abgesenkte Region enthält, wobei die abgesenkte Region einen Brechungsindex ($n_2$) hat, der kleiner als die Brechungsindizes des Kerns ($n_1$) und der Ummantelung ($n_3$) ist; und **dadurch** dass

die zweite chromatische Dispersion nicht geringer als

-73 ps/nm/km und nicht mehr als -46 ps/nm/km ist.

2. Optische Übertragungsleitung (20) gemäß Anspruch 1, wobei die erste wirksame Kernfläche nicht kleiner als 100 $\mu$m$^2$ ist.

3. Optische Übertragungsleitung (20) gemäß Anspruch 1, wobei die zweite wirksame Kernfläche nicht kleiner als 15 $\mu$m$^2$ ist.

4. Optische Übertragungsleitung (20) gemäß Anspruch 1, wobei die dritte wirksame Kernfläche nicht kleiner als 100 $\mu$m$^2$ ist.

5. Optische Übertragungsleitung (20) gemäß Anspruch 1, wobei die relative Brechungsindexdifferenz des Kerns zu der Ummantelung der zweiten optischen Faser nicht kleiner als 1,4% und nicht mehr als 1,8% ist.

6. Optische Übertragungsleitung (20) gemäß Anspruch 1, wobei das Verhältnis $((L_1 + 0, 5L_2)/(L_1 + L_2 + L_3))$ nicht kleiner als 0,4 und nicht mehr als 0,5 ist, und eine Raman-Verstärkungs-Pumplichtquelle, die zur Raman-Verstärkung des Signallichts verwendet wird, von der Lichtaustrittsposition geliefert wird.

7. Optische Übertragungsleitung (20) gemäß Anspruch 1, wobei das Verhältnis $((L_1 + 0,5L_2) / (L_1 + L_2 + L_3))$ nicht kleiner als 0,5 und nicht mehr als 0,7 ist, und ein Raman-Verstärkungs-Pumplicht, das zur Raman-Verstärkung des Signallichts verwendet wird, von der Lichteintrittsposition und der Lichtaustrittsposition geliefert wird.

8. Optisches Kommunikationssystem, das eine erste optische Faser (11), eine zweite optische Faser (12), eine dritte optische Faser (13) und eine Raman-Verstärkungs-Pumplichtquelle (31, 41) umfasst, wobei die erste, die zweite und die dritte optische Faser in diesem Ablauf verbunden sind, um eine optische Übertragungsleitung (20) zu bilden, und zwischen einer Signallicht-Eintrittsposition und einer Signallicht-Austrittsposition angeordnet sind; wobei die erste optische Faser eine erste wirksame Kernfläche und eine erste positive chromatische Dispersion bei einer Wellenlänge von 1550 nm hat, wobei die zweite optische Faser eine zweite wirksame Kernfläche und eine zweite negative chromatische Dispersion bei einer Wellenlänge von 1550 nm hat, wobei die dritte optische Faser eine dritte wirksame Kernfläche und eine dritte positive chromatische Dispersion bei einer Wellenlänge von 1550 nm hat, wobei

die zweite wirksame Kernfläche kleiner als die erste wirksame Kernfläche und die dritte wirksame Kernfläche ist; und wobei

das optische Kommunikationssystem so angeordnet ist, dass Signallicht mittels einer Raman-Verstärkung verstärkt wird, während das Signallicht sich durch die optische Übertragungsleitung ausbreitet;

wenn die Länge der ersten optischen Faser, die Länge der zweiten optischen Faser und die Länge der dritten optischen Faser durch $L_1$, $L_2$ bzw. $L_3$ dargestellt sind, das Verhältnis $(L_2/ (L_1 + L_2 + L_3))$ in dem Bereich von 0,2 bis 0,4 ist; und

die Längen der ersten, der zweiten und der dritten optischen Faser so angeordnet sind, dass die gesamte chromatische Dispersion der ganzen optischen Übertragungsleitung bei einer Wellenlänge von 1550 nm Null ist;

**dadurch gekennzeichnet, dass**

die zweite optische Faser einen Kern mit der Mitte einer optischen Achse, eine um den Kern herum angeordnete Ummantelung und eine zwischen dem Kern und der Ummantelung angeordnete abgesenkte Region hat, wobei die abgesenkte Region einen Brechungsindex ($n_2$) hat, der kleiner als die Brechungsindizes des Kerns ($n_1$) und der Ummantelung ($n_3$) ist; und **dadurch** dass

die zweite chromatische Dispersion nicht kleiner als -73 ps/nm/km und nicht mehr als -46 ps/nm/km ist.

**Revendications**

1. Ligne de transmission optique (20) comprenant une première fibre optique (11), une deuxième fibre optique (12), et une troisième fibre optique (13), lesdites première, deuxième et troisième fibres optiques étant connectées l'une à l'autre dans cette séquence et étant disposées entre une position d'incidence de lumière de signal et une position de sortie de lumière de signal, ladite première fibre optique ayant une première zone du coeur efficace et une première dispersion chromatique positive à une longueur d'onde de 1550 nm, ladite deuxième fibre optique ayant une deuxième zone du coeur efficace et une deuxième dispersion chromatique négative à une longueur d'onde de 1550 nm, ladite troisième fibre optique ayant une troisième zone du coeur efficace et une troisième dispersion chromatique positive à une longueur d'onde de 1550 nm, dans laquelle :

   ladite deuxième zone du coeur efficace est plus petite que ladite première zone du coeur efficace et ladite troisième zone du coeur efficace ;
   quand la longueur de la première fibre optique, la longueur de la deuxième fibre optique, et la longueur de la troisième fibre optique sont représentées par $L_1$, $L_2$, et $L_3$, respectivement, le rapport ($L_2$ / ($L_1 + L_2 + L_3$)) n'est pas de moins de 0,2 et n'est pas de plus de 0,4 ; et
   les longueurs des première, deuxième et troisième fibres optiques sont arrangées de telle sorte la dispersion chromatique globale de la ligne de transmission optique tout entière soit égale à zéro à une longueur d'onde de 1550 nm ;

   **caractérisée en ce que** :

   ladite deuxième fibre optique (12) comprend un coeur qui contient le centre d'un axe optique, une gaine disposée autour dudit coeur, et une région amincie disposée entre ledit coeur et ladite gaine, ladite région amincie ayant un indice de réfraction ($n_2$) qui est inférieur aux indices de réfraction dudit coeur ($n_1$) et de ladite gaine ($n_3$) ; et
   **en ce que** :
   ladite deuxième dispersion chromatique n'est pas de moins de -73 ps / nm / km et n'est pas de plus de -46 ps / nm / km.

2. Ligne de transmission optique (20) selon la revendication 1, dans laquelle ladite première zone du coeur efficace n'est pas de moins de 100 $\mu m^2$.

3. Ligne de transmission optique (20) selon la revendication 1, dans laquelle ladite deuxième zone du coeur efficace n'est pas de moins de 15 $\mu m^2$.

4. Ligne de transmission optique (20) selon la revendication 1, dans laquelle ladite troisième zone du coeur efficace n'est pas de moins de 100 $\mu m^2$.

5. Ligne de transmission optique line (20) selon la revendication 1, dans laquelle la différence d'indice de réfraction relative dudit coeur par rapport à la gaine de ladite deuxième fibre optique n'est pas de moins de 1,4 % et n'est pas de plus de 1,8 %.

6. Ligne de transmission optique line (20) selon la revendication 1, dans laquelle le rapport (($L_1 + 0,5L_2$) / ($L_1 + L_2 + L_3$)) n'est pas de moins de 0,4 et n'est pas de plus de 0,5, et une lumière de pompage d'amplification Raman utilisée pour une amplification Raman d'une lumière de signal est fournie à partir de ladite position de sortie de lumière.

7. Ligne de transmission optique line (20) selon la revendication 1, dans laquelle le rapport (($L_1 + 0,5L_2$) / ($L_1 + L_2 + L_3$)) n'est pas de moins de 0,5 et n'est pas de plus de 0,7, et une lumière de pompage d'amplification Raman utilisée pour une amplification Raman d'une lumière de signal est fournie à partir de ladite position d'incidence de lumière et de ladite position de sortie de lumière.

8. Système de communication optique comprenant une première fibre optique (11), une deuxième fibre optique (12), une troisième fibre optique (13), et une source de lumière de pompage d'amplification Raman (31, 41), lesdites première, deuxième et troisième fibres optiques étant connectées l'une à l'autre dans cette séquence de façon à former une ligne de transmission optique (20) et étant disposées entre une position d'incidence de lumière de signal et une position de sortie de lumière de signal ; ladite première fibre optique ayant une première zone du coeur efficace et une première dispersion chromatique positive à une longueur d'onde de 1550 nm, ladite deuxième fibre optique ayant une deuxième zone du coeur efficace et une deuxième dispersion chromatique négative à une longueur d'onde de 1550 nm, ladite troisième fibre optique ayant une troisième zone du coeur efficace et une troisième dispersion chromatique positive à une longueur d'onde de 1550 nm, dans lequel :

ladite deuxième zone du coeur efficace est plus petite que ladite première zone du coeur efficace et ladite troisième zone du coeur efficace ; et dans lequel :

le système de communication optique est arrangé de telle sorte qu'une lumière de signal est amplifiée au moyen d'une amplification Raman pendant que la lumière de signal se propage à travers ladite ligne de transmission optique ;
quand la longueur de la première fibre optique, la longueur de la deuxième fibre optique, et la longueur de la troisième fibre optique sont représentées par $L_1$, $L_2$, et $L_3$, respectivement, le rapport ($L_2 / (L_1 + L_2 + L_3)$) se situe dans la plage de 0,2 à 0,4 ; et
les longueurs des première, deuxième et troisième fibres optiques sont arrangées de telle sorte la dispersion chromatique globale de la ligne de transmission optique tout entière soit égale à zéro à une longueur d'onde de 1550 nm ;

**caractérisé en ce que** :

ladite deuxième fibre optique comprend un coeur qui contient le centre d'un axe optique, une gaine disposée autour dudit coeur, et une région amincie disposée entre ledit coeur et ladite gaine, ladite région amincie ayant un indice de réfraction ($n_2$) qui est inférieur aux indices de réfraction dudit coeur ($n_1$) et de ladite gaine ($n_3$) ; et
**en ce que** :
ladite deuxième dispersion chromatique n'est pas de moins de -73 ps / nm / km et n'est pas de plus de -46 ps / nm / km.

FIG. 1

FIG. 2

FIG. 3

FIG. 4

FIG. 5

FIG. 6

17

FIG. 7

FIG. 8

FIG. 9

FIG. 10

FIG. 11

FIG. 12

FIG. 13

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Development of a long-haul large-capacity wavelength-division multiplexed optical transmission line. *SEI Technical Review, Sumitomo Electric Industries,* September 2000, vol. 157, 45-49

- Optimum span configuration of raman- amplified dispersion-managed fibers. *OFC Technical Digest Postconference,* 17 March 2001, vol. 54, MI51-MI54